# EUROPÄISCHE PATENTANMELDUNG

(11) **EP 0 999 647 A1**
(43) Veröffentlichungstag der Anmeldung: **10.05.2000**
(21) Anmeldenummer: 99121459.4
(22) Anmeldetag: 28.10.1999
(51) Int. Cl.: H03M 7/30

(54) **Verfahren der Geometrischen Informationsverarbeitung (VGI)**

(30) Priorität: 02.11.1998 DE 19850393; 21.01.1999 DE 19902182
(71) Anmelder: Krumpholz, Ingo, 31582 Nienburg (DE)
(72) Erfinder: Krumpholz, Ingo, 31582 Nienburg (DE)

(57) **Zusammenfassung**

Informationsdarstellung, wobei die Zeichen der Information so zu einer Zahl verknüpft, dass sich aus der Zahl wieder die Reihenfolge der miteinander verknüpften Zeichen ergibt, wenn das Verknüpfungsschema in inverser Form auf die Zahl angewendet wird.

## Beschreibung

**Kennzeichnender Teil der VGI**: Die einzelnen Bit einer Information werden so miteinander verknüpft, dass sich eine Zahl ergibt, welche nur dieser einen Bit-Verknüpfung zugeordnet werden kann. Hierdurch genügt es die Zahl anzugeben, ohne die Information Bit für Bit zu übermitteln. Denn die in der Zahl enthaltene Information ergibt sich automatisch, indem das Verknüpfungsschema in reziproken Weise auf die Zahl angewendet wird. Das Verfahren wird als *Verfahren der Geometrischen Informationsverarbeitung*, kurz VGI bezeichnet. Eine nach diesem Verfahren entstandene Zahl wird VGI-Zahl genannt.

### Schema 1: Verfahren zur Erzeugung und Entschlüsselung einer VGI-Zahl Verschlüsselung

- 1. Schritt: Sp0 =: Sp0 + Basis^{VS}
- 2. Schritt: VGI-Zahl =: VGI-Zahl + ((Wert + 1) * Sp0)
- 3. Schritt: VS =: VS + 1
- 4. Schritt: weitere Werte hinzufügen dann gehe zu Schritt 1
- 5. Schritt:

### Entschlüsselung

- 1. Schritt: Wert =: Int((VGI-Zahl) / Sp0) - 1
- 2. Schritt: VGI-Z. =: VGI-Z. - ((Wert + 1)* Sp0)
- 3. Schritt: Sp0 =: Sp0 - Basis^{VS}
- 4. Schritt: VS =: VS - 1
- 5. Schritt: VS > 0 dann gehe zu Schritt 1

VS = Verknüpfungsstufe = Anzahl der miteinander verknüpften Werte - 1
Sp0 = erste Spalte der Matrix = Basis⁰ + Basis¹ ........ + Basis^{VS}
Wert = Bitwert der Information = 0 ...... Basis - 1

In Schema 1a werden als Beispiel die Werte 2, 3 und 0 nach der VGI mit der Basis 4 verknüpft. Hierzu wird zunächst eine waagerechte Matrix mit den Zahlen des Wertebereiches gebildet. In dieser wird die Zahl markiert, die dem ersten darzustellenden Informationsbit entspricht, siehe Schema 1a Verknüpfungsstufe 0 [VS = 0]. Anschließend wird die Zeile in die Senkrechte aufgeklappt. In der waagerechten Zeile (0) werden nun erneut die Zahlen des Wertebereiches aufgetragen und die Schnittpunkte von Zeile und Spalte werden mit Zahlen markiert, so daß sich anhand einer solchen Zahl die zugehörigen Werte der senkrechten und waagerechten Achsen ergeben, siehe Schema 1a Verknüpfungsstufe 1. Damit ergibt sich eine ebene geometrische Matrix, mit den Seitenlängen von Spalte 0 und Zeile 0. In Zeile 0 wird nun der nächste zu verknüpfende Informationswert aufgetragen und der Schnittpunkt der markierten waagerechten und senkrechten Zahl wird in der Matrix markiert. In Schema 1a also der Wert 18, da dieser die Koordinaten der beiden zu verknüpfenden Informationsbit darstellt. Nachdem dies geschehen ist, werden alle Zahlen der Matrix erneut in die senkrechte Spalte 0 aufgeklappt und die waagerechte Zeile 0 wird wiederum mit den Zahlen des Wertebereiches aufgefüllt. Im übrigen wird wieder so vorgegangen wie beim letzten Schritt. Es wird also der nächste zu verknüpfende Informationswert in Spalte 0 markiert und der Wert 38 in der Matrix, da dies die Koordinate der aktiven Werte 18 und 0 ist. Um weitere Werte hinzuzufügen wird der Zahlenbereich wieder in Spalte 0 aufgeklappt. In Spalte 0 ist nun der Wert 38 markiert, der nach der gleichen Methode mit dem nächsten Informationsbit verknüpft wird.

Bei der Darstellung einer Information, nach Schema 1, ergibt sich, aus der VGI-Zahl, die Anordnung aller miteinander verknüpften Werte, indem die entstandene Zahl, mit Hilfe des Entschlüsselungsschemas, wieder in reziproker Form zerlegt wird. Die Information muß also nicht mehr bitweise übertragen werden, da sich aus der VGI-Zahl sowohl die miteinander verknüpften Elemente, als auch deren Reihenfolge ergibt. Der Informationsgewinn ist allerdings mit einem höheren Platzbedarf verbunden.

Dies wird dadurch behoben, daß
1. immer die gleiche Anzahl von Bit's miteinander verknüpft wird, wie z.B. bei der DNS oder
2. die Anzahl der durchgeführten Verknüpfungen gesondert mitgeteilt wird oder
3. indem der letzte hinzugefügte Wert nie der kleinste Wert des Wertebereiches bzw. 0 ist.

Ist eine dieser drei Bedingungen erfüllt, so wird die VGI-Zahl entsprechend Schema 2 gebildet und benötigt dann nicht mehr Platz, als die bisherige Informationsdarstellung. Der Informationsgewinn ergibt sich dabei aus den getroffenen Vereinbarungen, gemäß Punkt 1 bis 3, d.h. die Anzahl der Verknüpfungsstufen [VS] ist entweder bekannt oder kann nach der folgenden mathematischen Beziehung ermittelt werden: **VS =: Int(In(VGI-Zahl) / (In(Basis)).**

### Schema 2: Verfahren zur Erzeugung und Entschlüsselung einer VGI-Zahl Verschlüsselung

- 1. Schritt: VGI-Zahl =: VGI-Zahl + (Wert * Basis^{VS})
- 2. Schritt: VS =: VS + 1
- 3. Schritt: weitere Werte hinzufügen, gehe zu Schritt 1
- 4. Schritt:

### Entschlüsselung

- 1. Schritt: Wert =: Int(VGI-Zahl / Basis^{VS})
- 2. Schritt: VGI-Z =: VGI-Z - (Basis^{VS} * Wert)
- 3. Schritt: VS =: VS - 1
- 4. Schritt: VS > 0 dann gehe zu Schritt 1

Der grundlegende Unterschied des Verfahrens nach Schema 1 und 2 besteht in der Verwendung von Spalte 0. Bei Schema 1 wird diese Spalte nur zur Darstellung des Wertes der letzten durchgeführten Verknüpfung benutzt, während Spalte 0 bei Schema 2 gleichzeitig mitbenutzt wird, um die nächste Information darzustellen. Sofern bekannt ist wieviel Verknüpfungen durchgeführt wurden oder wenn eine bestimmte Anzahl von Verknüpfungen fest vereinbart ist, z.B. drei Bit bei der DNS, dann spielt es keine Rolle, ob der letzte hinzugefügte Wert der kleinste Wert der Wertebereiches ist, weil die Entschlüsselung erst dann abgebrochen wird wenn VS = 0 ist. Schema 2a zeigt die Verknüpfung der Werte 2, 3 und 0 in einem Zahlensystem der Basis 4 nach Schema 2.

Als Folge der gezeigten Verknüpfung zu einer VGI-Zahl ist ein Punkt in einem Raum bzw. einer Matrix, immer nur auf einem einzigen Weg erreichbar, woraus umgekehrt folgt, daß sich alleine aus der Kenntnis der Koordinaten dieses einen Punktes die vollständige Information ergibt, weit es keine zweite Möglichkeit gibt, zu diesem Punkt zu gelangen. Statt der gezeigten zweidimensionalen geometrischen Verknüpfungsmethode kann auch ein anderes System beliebig vieler Dimensionen verwendet werden.

Gegenwärtig werden z.B. die Buchstaben dieses Textes durch ANSI oder ASCII Zeichen binär codiert und Byte für Byte verarbeitet. Heraus kommt dabei eine Bitfolge gemäß Schema 8.
a₄ = 00101001 = 0 * 2⁷ + 0 * 2⁶ + 1 * 2⁵ + 0 * 2⁴ + 1 * 2³ + 0 * 2² + 0 * 2¹ + 1 * 2⁰
a₃ = 111010011 = 1 * 2⁷ + 1 * 2⁶ + 1 * 2⁵ + 0 * 2⁴ + 1 * 2³ + 0 * 2² + 0 * 2¹ + 1 * 2⁰
a₂ = 00101111 = 0 * 2⁷ + 0 * 2⁶ + 1 * 2⁵ + 0 * 2⁴ + 1 * 2³ + 1 * 2² + 1 * 2¹ + 1 * 2⁰
a₁ = 00111001 = 0 * 2⁷ + 0 * 2⁶ + 1 * 2⁵ + 1 * 2⁴ + 1 * 2³ + 0 * 2² + 0 * 2¹ + 1 * 2⁰
a₀ = 00100001 = 0 * 2⁷ + 0 * 2⁶ + 1 * 2⁵ + 0 * 2⁴ + 0 * 2³ + 0 * 2² + 0 * 2¹ + 1 * 2⁰

Bei Verwendung von Schema 2 ergibt sich daraus die VGI- Zahl mit dem Wert:
**Zahlenwert der Gesamtheit einer Information** = 0010100111101001001011110011100100100001 = 0 * 2³⁹ + 0 * 2³⁸ + 1 * 2³⁷ + 0 * 2³⁶ + 1 * 2³⁵ + 0 * 2³⁴ + 0 * 2³³ + 1 * 2³² + 1 * 2³¹ + 1 * 2³⁰ + 1 * 2²⁹ + 0 * 2²⁸ + 1 * 2²⁷ + 0 * 2²⁶ + 0 * 2²⁵ + 1 * 2²⁴ + 0 * 2²³ + 0 * 2²² + 1 * 2²¹ + 0 * 2²⁰ + 1 * 2¹⁹ + 1 * 2¹⁸ + 1 * 2¹⁷ + 1 * 2¹⁶ + 0 * 2¹⁵ + 0 * 2¹⁴ + 1 * 2¹³ + 1 * 2¹² + 1 * 2¹¹ + 0 * 2¹⁰ + 0 * 2⁹ + 1 * 2⁸ + 0 * 2⁷ + 0 * 2⁶ + 1 * 2⁵ + 0 * 2⁴ + 0 * 2³ + 0 * 2² + 0 * 2¹ + 1 * 2⁰

Auch wenn sich auf den ersten Blick scheinbar absolut nichts ändert, weil die im Speicher des Computers befindliche Zeichen- bzw. Bitfolge völlig gleich bleibt und die Bitfolge lediglich etwas anders interpretiert wird als bisher, ist der Unterschied gravierend, da sich nun folgende Möglichkeiten ergeben:
**1. Datenspeicherung:** Die Information kann dadurch gespeichert werden, dass auf dem Datenträger nur an den Koordinaten ein Punkt gemacht wird, die dem jeweiligen Zahlenwert der Information entsprechen. Ein einziges gesetztes Kennungsbit zeigt somit den vollständigen Informationsinhalt an.
**2. Datenspeicherung:** Die Information kann dadurch gespeichert und übermittelt werden, dass die Koordinaten des Punktes bzw. der Zahlenwert welcher die Information enthält in einer rationellen mathematischen Darstellungsform angegeben wird. Es lassen sich damit sämtliche mathematischen Verfahren zur rationellen Informationsdarstellung einsetzen.
**3. Datenübertragung:** Der Zahlenwert kann dadurch übermittelt werden, dass ein Zähler beim Empfänger zunächst durch ein Signal gestartet wird und mit einem zweiten Signal bei der Zahl gestoppt wird welche der zu übermittelnden Zahl entspricht. Statt einer riesigen binären oder analogen Bitfolge werden nun nur noch zwei Signale zur Informationsübermittlung benötigt. Als Referenz kann beispielsweise das Signal der Atomzeituhr oder der Quarzgenerator des Computers genutzt werden Angenommen, Schema 8 enthält alles Wissens der Menschheit ,so ergibt sich daraus die 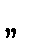 Weltzahl":
   Gesamtheit allen Wissens der Menschheit = WZ = aₙ * 2ⁿ + ........................... + a₁ * 2¹ + a₀ * 2⁰

Hilbert hat im Jahr 1909 hinsichtlich des Waringschen Problems bewiesen, dass sich jede natürliche Zahl als Summe einer festen Anzahl n-ter Potenzen x₁^{k} + ................ + xₛ^{k} darstellen läßt. Z.B. ist jede positive rationale Zahl als Summe von drei positiven rationalen Kubikzahlen oder durch vier Quadratzahlen darstellbar. Statt das gesamte Wissen der Menschheit durch ein unendlich großes Polynom darzustellen kann das gesamte Wissen der Menschheit damit auch durch vier bzw. drei Zahlen dargestellt werden.
Gesamtheit allen Wissens der Menschheit = WZ = x₁² + x₂² + x₃² +x₄² oder x₁³ + x₂³ + x₃³

Hiermit wäre allerdings nichts gewonnen, da die Werte x₁ .... x₄ riesengroß wären. Dies läßt sich dadurch beheben, dass die Zahl zunächst erst einmal durch die n-ten Potenzen dargestellt wird, die eine bestmögliche Annäherung an der Zahlenwert ergeben, so daß durch die Kubik- oder Quadratzahlen nur noch ein verhältnismäßig kleiner Rest darzustellen ist und sich das gesamte Wissen der Menschheit somit auf einer einzigen Diskette oder auf einem einzigen Blatt Papier speichern läßt, beispielsweise in der Form:
WZ = (x₁² + x₂² + x₃² + x₄²) + (x₅ * x₆ * x₇ * x₈ * 92834²⁷²⁹³² * 35933853213812⁹²⁸²⁹³⁰¹²²²³⁹³⁴⁸³⁹³⁸²³⁹¹⁹²³⁷³⁵)
oder allgemein
Information = VGI-Zahl = **a * x**^{m/n} + **Rest** z.B (x₁² + x₂² + x₃² + x₄²)

Aus dieser Zahl kann nun mit Hilfe von Schema 2 wieder die Ursprungsbitfolge erzeugt werden. Es spielt dabei keine Rolle mit welcher Basis gearbeitet wird, d.h. es muß nicht binär gearbeitet werden.

### Anwendungsbeispiele

### Datenkompression

Die VGI benötigt genau soviel Platz, wie die jetzige Darstellung einer Information. Es ergibt sich aber ein Informationsgewinn, da jede VGI-Zahl die vollständige Information darüber enthält, welche Zeichen in welcher Reihenfolge miteinander verknüpft wurden. Oft kann der Platzbedarf bei der VGI deutlich reduziert werden, weil, z.B. beim ANSI-Zeichensatz, viele Werte nicht belegt sind. Bei der jetzigen Darstellung muß der Wertebereich systembedingt immer verdoppelt werden muß, z.B. von 2⁷ auf 2⁸ Werte. Bei der VGI kann der Zeichenvorrat demgegenüber bedarfsgerecht von z.B. 127 auf 130 erhöht werden, womit nur soviel Platz verbraucht wird, wie tatsächlich nötig ist. Die Darstellung als VGI-Zahl bietet weiterhin die Möglichkeit, Methoden der Zahlentheorie zur rationellen Darstellung der Information zu nutzen, beispielsweise Hilberts Lösung des Waringschen Problems oder ein beliebiges anderes mathematisches Verfahren welches eine optimale Zahlendarstellung ermöglicht, weil ja nicht mehr die Information selbst übermittelt wird, sondern nur noch ihr Zahlenäquivalent, aus dem erst anschließend die einzelnen Bitwerte der Information abgeleitet werden und aus jeder Zahl immer die gleiche Bitfolge entsteht.

### Speichern von Informationen

Bei der VGI wird, jedenfalls im Prinzip, nur ein einziges Bit gelesen, da sich entsprechend den Grundsätzen der VGI aus einem einzigen gesetzten Bit einer Matrix wieder die vollständige Information ergibt. Ein Datenträger wird dementsprechend als Matrix nach Schema 2a betrachtet. Die Zeichen 2, 3, 0 werden gespeichert, indem an den Koordinaten, die auf dem Datenträger die Zahl 14 repräsentieren, ein Bit gesetzt wird. Beim lesen des Datenträgers wird an der Stelle des gesetzten Bits der Wert 14 als gültige Information erkannt und mit der VGI wieder in die Zeichenfolge 2, 3, 0 verwandelt. Ein Foto, oder der Inhalt eines Schreibens, wird in diesem Sinne als ein einziger Punkt auf einem geeigneten Datenträger dargestellt und erst später in seine einzelnen Informationsbits zurückverwandelt. Dieses Grundprinzip läßt sich allerdings nicht unmittelbar umsetzen, da bei der VGI Zahlen entstehen, welche die Menge der Atome des gesamten Universums bei weitem übersteigen. Es ist deshalb ein Umweg erforderlich.

Um die VGI-Zahlen dennoch darstellen zu können werden mehrere Datenträger parallelgeschaltet, so daß sie ein Stellenwertsystem verkörpern, welches die VGI-Zahl als Summe mehrerer Potenzen darstellt. Damit jede VGI-Zahl auf einem Datenträger-System Platz findet wird zusätzlich vereinbart, daß alle Informationen grundsätzlich in Einheiten einer bestimmten Größe gespeichert werden, z.B. eine DIN A-4 Seite mit 3.200 Zeichen im ANSII-Zeichensatz oder ein Bild mit 300.000 Bildpunkten. Kann ein Datenträger die größte auftretende VGI-Zahl speichern, so kann er sämtliche Bücher und Fotos speichern, ohne daß es jemals zu einem Überlauf kommt. Gleichzeitig wird gesichert, daß nichts doppelt gespeichert wird, da gleiche Bitfolgen die gleiche VGI-Zahl ergeben und damit automatisch an der gleichen Stelle gespeichert werden.

Beispiel: Es stehen vier Datenträger mit jeweils 4.100 Bit zur Verfügung. Durch Parallelschaltung dieser vier Datenträger entsteht ein Stellenwertsystem mit der Basis 4.100. Ein gesetztes Bit steht dabei nicht mehr für einen binären Wert, sondern für die Zahl, die sich aus den Koordinaten des jeweils gesetzten Bit ergibt, multipliziert mit der Potenz des Datenträgers.

VGI-Zahl:
255 * 256⁰ + 255 * 256¹ + 255 * 256² + 255 * 256³ + 255 * 256⁴ + 255 * 256⁵ = 281.474.976.710.655

Diese Zahl wird zwecks Speicherung umgewandelt in
4084 * 4.100³ + 95 * 4.100² + 3.844 * 4.100¹ + 255 * 4.100⁰ + = 281.474.976.710.655

Prinzip der Parallelschaltung von vier Datenträgern mit jeweils 4.100 Bit siehe Schema 10

Im Unterschied zum bisherigen Verfahren wird der Datenträger nicht mehr bewegt, da die einzelnen binären Bit nicht mehr sequentiell eingelesen werden müssen. Die VGI-Zahl wird vielmehr einmalig in ein Schieberegister eingelesen und von diesem in die einzelnen Bit zerlegt. Hierdurch entfällt die störanfällige Mechanik und die Lesegeschwindigkeit wird erhöht, da ein Schieberegister weitaus schneller arbeiten kann, als ein mechanisches System. Bei Filmen und Musikstücken muß allerdings ein Taktgeber dafür sorgen, daß die Zerlegung der VGI-Zahl mit der richtigen Geschwindigkeit erfolgt. Das Restproblem besteht darin, die Zusammengehörigkeit der zu einer Zahl gehörenden Bitwerte kenntlich zu machen.

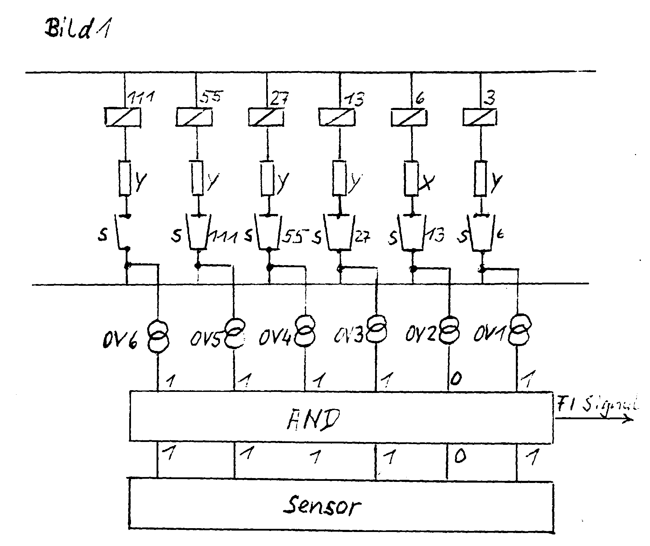

Möglichkeiten zur Kennzeichnung der zu einer Zahl gehörenden Bit:
1. Es wird ein Inhaltsverzeichnis angelegt, welches die zu einer Zahl gehörenden Bit unter einem Stichwort enthält und unter einer festen Adresse abspeichert. Das Verfahren entspricht damit weitgehend der bei Festplatten üblichen Verwaltung der in Sektoren abgelegten Datenblöcke.
2. Die zu einer Zahl gehörenden Bit werden miteinander verbunden, z.B. durch eine Linie, einen Draht oder eine sonstige geeignete Verbindung.
3. Die einzelnen Punkte werden z.B. durch eine Interpolationsfunktion beschrieben.
4. Es wird ein Datenspeicher benutzt, der funktionell entsprechend Bild 1 arbeitet.

### Datenübertragung

Die Datenübertragung erfolgt nach dem gleichen Prinzip wie die Datenspeicherung, indem die VGI-Zahl in solche Einheiten zerlegt wird, daß diese durch einen Digital-Analogwandler in Frequenzen umgesetzt werden können. Die Frequenz hat hier die gleiche Funktion wie die einzelnen Bit eines Datenträgers. In dem vorgestellten Beispiel wird die VGI-Zahl dementsprechend der Reihe nach durch die Frequenzen 4084, 95, 3844 und 255 übermittelt. Diesen Frequenzen sind die vereinbarten Potenzen der jeweiligen Stelle zugeordnet. Um eine eindeutige Informationsübertragung zu gewährleisten beginnt eine Nachricht mit einer fest vereinbarten Frequenz, die als Anfangskennung dient und endet mit einer vereinbarten Ende-Kennung. Die dazwischenliegenden Frequenzen werden als Basis der vereinbarten Potenzreihe interpretiert und enthalten die eigentliche Information. Für die Aufteilung einer VGI-Zahl in Potenzen ist die Auflösungsgenauigkeit des Wandlers maßgeblich. Je größer dessen Auflösung ist, umso mehr verkürzt sich die Übertragungsdauer gegenüber der binären Informationsverarbeitung. Trotz der analogen Übertragung geht dabei nichts von der digitalen Information verloren, da diese erst beim Empfänger aus der VGI-Zahl abgeleitet wird und der bereits gezeigte Kontrollmechanismus die Möglichkeit bietet zu prüfen, ob die Information fehlerfrei übertragen wurde oder nicht.

Statt die VGI- Zahl durch eine äquivalente Amplitude, Frequenz oder Phasenverschiebung zu übertragen, kann die Informationsübertragung auch mit Hilfe eines Zählsystems erfolgen. Hierzu setzt der Sender einen beim Empfänger befindlicher Zähler (z.B. einen Quarzgenarator) durch einen Startimpuls auf null und stop diesen nach Ablauf des Zeitintervalls, der der zu übermittelnden VGI-Zahl entspricht, durch einen weiteren Impuls. Die so übermittelte Zahl wird dann im Empfänger wieder in die bisher übliche Form der Informationsdarstellung zurückverwandelt und weiterverarbeitet.

Angenommen, es soll der Inhalt einer beliebigen DIN A-4 Seite übertragen werden, die aus 3.200 ANSI bzw. ASCII-Zeichen besteht, so ist eine Zahl im Bereich von 0 bis 2^{25.600} zu übermitteln. Bei der bisherigen binären Übertragungstechnik sind dementsprechend 25.600 Bit zu übertragen, um die Information zum Empfänger zu transportieren, deren Zahlenwert sich aus folgendem Polynom ergibt:
DIN A-4 Seite = a_{25.599} * 2^{25.599} + a_{25.598} * 2^{25.598} + a_{25.597} * 2^{25.597} + ........................ + a₁ * 2¹ + a₀ * 2⁰

Die gleiche DIN A-4 Seite läßt sich natürlich auch in folgender Form darstellen und übermitteln:
DIN A-4 Seite = a_{3.199} * 256^{3.199} + a_{3.198} * 256^{3.198} + a_{3.197} * 256^{3.197} + ................. + a₁ * 256¹ + a₀ * 256⁰

Um die DIN A-4 Seite mit der herkömmlichen Technik zu übertragen ist nun allerdings ein System mit 256 Basiswerten erforderlich, verbunden mit den bekannten technischen Problemen. Der entscheidende Vorteil der Verwendung eines Zählsystems besteht darin, dass zur Übertragung dieser Werte nur binäre Signale erforderlich sind. Hierzu werden die Signale eines Quarzgenerators mit beispielsweise 350 MHz in Blöcke mit jeweils 256 (Hz) zerlegt. Innerhalb jedes 256-er-Datenblocks wird ein Signal gesendet, um den Zahlenwert aⁿ der Potenz 256ⁿ anzugeben, d.h., nach dem Rücksetzen des Zählers steht das erste Signal für den Zahlenwert von a_{3.199}, das zweite Signal für a_{3.198}, das dritte Signal für a_{3.197} und das dreitausendzweihundertste Signal für der Wert von aₒ. Anschließend beginnt die nächste DIN A-4 Seite. Dementsprechend lassen sich pro Sekunde 350 * 10⁶ / 3.200 / 256 = 427 DIN A-4Seiten mit 3.200 ASCII-Zeichen übertragen, wobei zu deren Übertragung insgesamt 1.387.187 Signale gesendet werden müssen. Bei der herkömmlichen Technik müßten zur Darstellung dieser 427 Seiten * 25.600 Bit/Seite = 10.937.496 binäre Signale übertragen werden.

Angenommen, zur Datenübertragung steht ein Modern zur Verfügung, welches die 1.367.187 Signale nicht übertragen kann. Dadurch, dass jede Information grundsätzlich als Zahl betrachtet und mittels Zählsystem übertragen wird, läßt sich dieses Problem ganz leicht mit mathematischen Mitteln lösen. Die 25.600 Bit der DIN A-4 Seite werden nicht mehr in Datenblöcke mit 8 Bit (2⁸ = 256 Werte), sondern in Datenblöcke mit 13 Bit zerlegt (2¹³ = 8.192 Werte). Eine DIN A-4 Seite (oder eine beliebige sonstige Information) ergibt sich somit aus den Werten:
DIN A-4 Seite = a_{1.968} * 8192^{1.968} + a_{1.967} * 8192^{1.967} + a_{1.966} * 8192^{1.966} + ........ + a₁ * 8192¹ + a₀ * 8192⁰

Damit müssen nur noch 1.969 Signale übertragen werden. Allerdings sind nun 8.192 Hz nötig um den Wert aₙ, von 8.192ⁿ, mittels Zählsystem darzustellen, d.h., die Übertragungsrate sinkt damit von 427 Seiten/s, auf 350 * 10⁶ / 8.192 = 42.724 Signale/s bzw. 42.724 / 1.969 = 21 Seiten/s. Um die Übertragungsleistung zu erhöhen könnte nun die Frequenz der Zeitbasis, mit Hilfe eines Frequenzvervielfachers von 350 Mhz auf 10,5 Ghz erhöht werden. Diese Frequenz wird nun in Datenblöcke mit 10.5 * 10⁹ / 56.000 = 2¹⁵ = 32.768 Werten aufgeteilt. Eine DIN A-4 Seite ergibt sich somit aus den Werten:
DIN A-4 Seite = a_{1.705} * 32.768^{1.705} + a_{1.704} * 32.768^{1.704} +............ + a₁ * 32.768¹ + a₀ * 32.768⁰

Mit dem gleichen Modem können damit 10,5 * 10⁹ / 32.768 / 1.706 = 188 DIN A-4 Seiten/s übertragen werden. Dies ist etwa das 188 * 25.600 / 64.000 = 75 fache einer herkömmlichen ISDN Leitung und immer noch das 7 fache eines ADSL Netzes. Werden diese Datennetze zur Übertragung genutzt, erhöht sich deren Leistung völlig analog. Ein ganz wesentlicher Vorteil des Zählsystems liegt somit in der Flexibilität mit der die Datenübertragungskapazität jedes vorhandene Übertragungssystem, wie z.B. Modems, ISDN, ADSL oder STM 1 Ringe angepaßt werden kann, ohne dass technische Baumaßnahmen nötig sind. Die technischen Grenzen liegen praktisch bei der Genauigkeit der verwendeten Zeitreferenz, d.h., derzeit also bei der Atomzeituhr. Möglich ist diese Art der Datenübertragung dadurch, dass jede Information als ganze Zahl behandelt und erst beim Empfänger in das Ursprungsformat zurückverwandelt wird.

### Standardisierung der Informationsverarbeitung

Da bei der VGI immer nur eine Zahl und deren mathematische Verknüpfung übrigbleibt, vollkommen unabhängig vom Wertevorrat der bei der Verschlüsselung verwendet wurde, wird der Wertevorrat der abschließenden Wertetabelle auf die Zeichen begrenzt, die zur Darstellung der VGI-Zahl nötig sind. Als Abschlußtabelle wird z.B. ein Wertevorrat entsprechend Schema 3 verwendet.

### Schema 3: Beispiel für den Zeichenbereich der abschließenden Wertetabelle mit der Basis 21

Dezimalwerte von 0 bis 9; + [11]; - [12]; * [13]; : [14]; In [15]; xⁿ[16]; x^{(1/n)} [17]; Trennzeichen [18] ; EndeKennung [19] ; Empfangsbestätigung [20]

Durch die abschließende Darstellung der VGI-Zahl, mit dem Wertebereich von Schema 3, ergibt sich ein Höchstmaß an Flexibilität und Standardisierung, da jede Information zunächst erst einmal einheitlich dargestellt und übermittelt wird, vollkommen unabhängig vom Anwendungsgebiet. Der Anwender kann damit, z.B. entsprechend Schema 4, in einer VGI-Zahl gleichzeitig die Daten, das Programm zu deren Interpretation, den Wertevorrat, ein Stichwort zum Inhalt, die verwendete Basis und einen kryptologischen Schlüssel unterbringen und so dafür sorgen, daß die Zahl nur dann genutzt werden kann, wenn alle Rahmenbedingungen bekannt sind.

### Schema 4; Beispiel für die Zusammenfassung verschiedener Informationen in einer VGI-Zahl

Basis
Sicherheitsschlüssel
Stichwort/ Index/ Verweis
Interpreter/Programm
Daten

Die Möglichkeit zur wahlfreien Interpretation einer Zahl ist insbesondere deshalb wichtig, weil hierdurch ein guter Schutz des Wirtschaftsgutes Information erreicht wird. Der besondere Vorteil der VGI besteht darin, daß die Information hier untrennbar mit einem kryptologischen Schlüssel verbunden werden kann, so daß die Information, z.B. ein Film oder Musikstück, nur vom Käufer mit seiner persönlichen Geheimzahl nutzbar ist oder nur auf einem bestimmten Gerät abgespielt werden kann, das mit nicht analysierbarer Hardware (tamber-proof chips), z.B mit einem Clipper-Chip oder Capston-Chip, ausgerüstet ist. Hierzu tritt der Computer des Anbieters mit dem Chip des Kundengerätes oder der Kundenkarte in Verbindung, ermittelt die Identnummer und verschlüsselt die eigene Information, unter Berücksichtigung der ID-Nummer des Kundengerätes bzw. der Kundenkarte, z.B. durch eine XOR-Verküpfung. Die so entstandene VGI-Zahl kann damit nur noch auf dem Gerät des Kunden bzw. nur mit dessen persönlicher Geheimzahl genutzt werden.

### Sicherstellung einer entropiefreien Datenübertragung

Formal wird der Informationsgehalt einer Nachricht durch deren Entropie H(M) angegeben. Eine fundamentale Aussage der Informationstheorie besteht darin, daß die Übermittlung einer Botschaft immer mit einem gewissen Verlust der in ihr enthaltenen Information verbunden ist. Allgemein hat die Entropie einer Nachricht in Bits den Wert log₂n, wenn n die Anzahl der möglichen Bedeutungen ist und alle Bedeutungen gleich wahrscheinlich sind. Bei der herkömmlichen Informationsübertragung besteht das Problem darin, daß nicht erkennbar ist, ob ein Informationsverlust eingetreten ist oder nicht. Bei der VGI wird dieses Problem dadurch behoben, daß jede Information grundsätzlich mit einer Ende-Kennung abgeschlossen wird. Hierdurch wird zwar der mögliche Informationsverlust nicht verhindert, aber es wird sicher gestellt, daß jeder Informationsverlust sofort erkannt wird, weil eine VGI-Zahl nur dann als gültige Information anerkannt wird, wenn sich bei der ersten Division die vereinbarte Ende-Kennung ergibt. Diese Kennung ergibt sich wiederum nur dann, wenn die Information vollständig übertragen wurde. Die VGI ermöglicht es damit zu erkennen, ob ein Informationsverlust vorliegt oder nicht. Dies gilt auch für die analoge Datenübertragung! Wird die Wertetabelle nach Schema 3 zur Verschlüsselung benutzt, so wird die empfangene Zahl Modulo 21 geteilt und geprüft, ob sich der Wert 19 ergibt. Wenn ja, dann ist die VGI-Zahl (Information) gültig, ansonsten ist sie ungültig.

Um zu kontrollieren, ob die Information angekommen ist, wird, zumindest bei hohen Sicherheitsanforderungen, vom Empfänger, an die als gültig erkannte VGI-Zahl, die Empfangsbestätigung [20] angehängt und möglicherweise noch eine eigene Kennung. Die neu entstandene Zahl wird anschließend an den Absender zurückgeschickt, womit dieser überprüfen kann, ob seine Information beim vorgesehenen Empfänger angekommen ist oder nicht. Hierdurch ist eine absolute Kontrolle einer fehlerfreien Datenübertragung gewährleistet, was besonders bei Anwendungen in gefahrträchtiger Umgebung

### Schutz vor Dokumentenfälschungen und Computerviren

Die mit der VGI verbundene eindeutige Informationsverarbeitung beseitigt ein weiteres zentrales Problem der Datenverarbeitung, das darin besteht, Dokumente, z.B. Urkunden, Schriftstücke, Verträge, Geldscheine, Aktien, Anleihen usw., sicher vor Fälschungen oder nachträglichen Veränderungen zu schützen. Die VGI sorgt hier für ein Höchstmaß an Sicherheit, da jede Zahl, bei einem fest vereinbarten Verschlüsselungsschema und Wertevorrat, immer die gleiche Information ergibt. Es ist damit vollkommen unmöglich die Information nachträglich auch nur um einen einzigen Punkt zu verändern. Damit ein Dokument nicht nachträglich verändert werden kann, versieht der Empfänger die Zahl, welche die Information darstellt, mit seiner digitalen Signatur und sendet die so entstandene Zahl an den Absender zurück. Dieser hängt nun seinerseits seine digitale Signatur an diese Zahl an und sendet diese erneut an den Empfänger zurück. Es gibt nun drei Zahlen, die des Originaltextes, die des Originaltextes mit der digitalen Unterschrift des Empfängers und die des Onginaltextes mit beiden digitalen Unterschriften. Diese drei Zahlen werden in das persönliche Endlosregister des Empfängers und des Absenders eingetragen, wobei das Endlosregister aus einer VGI-Zahl besteht und (zweckmäßigerweise) von einer, von beiden Vertragspartnern autorisierten Stelle geführt wird, die praktisch die Funktion eines Notars inne hat. Die Notwendigkeit für eine solche Einrichtung kann die VGI nicht beseitigen, da sie nicht verhindern kann, daß ein Vertragspartner ein selbstgeführtes Endlosregister einfach vernichtet, dies kann nur eine zuverlässige Kontrollinstanz gewährleisten. Fundamentale Voraussetzung, für die Wirksamkeit der Kontrollinstanz, ist jedoch die Unmöglichkeit eine Information nachträglich unbemerkt zu ändern. Hierfür liefert die VGI die notwendige Voraussetzung. Außerdem gewährleistet erst die aufgezeigte Form der Datenspeicherung, daß tatsächlich jedes Dokument gespeichert werden kann und trotzdem sofort wieder auffindbar ist. Bei der herkömmlichen Technik wäre jeder Datenspeicher innerhalb kürzester Zeit hoffnunglos überfüllt und die Suche nach einem Dokument würde ewig dauern. Steht demgegenüber, bei Verwendung der VGI, eine geeignete Aktzeptanzstelle zur Verfügung, dann ist es vollkommen unmöglich zu behaupten, ein Dokument nicht erhalten zu haben oder dieses nachträglich zu ändern. Der große Vorteil der VGI bersteht darin, daß die Akzeptanzstelle (Trustcenter) hierbei keinerlei Einblick in das Dokument erhält, da ihr der Verschlüsselungsalgorithmus unbekannt ist, wenn Schema 4 verwendet wird. Sie kann nur mit Sicherheit sagen, welche VGI-Zahlen ausgetauscht wurden. Die VGI ermöglicht also die Geheimhaltung der ausgetauschten Informationen, bei gleichzeitiger Fälschungssicherheit. Dies ist deshalb wichtig, weil es mit Risiken verbunden ist wenn Vertragspartner ihre Geschäftsgeheimnisse gegenüber Dritten offenlegen müssen. Dies kann bei durch die VGI wirksam vermieden werden.

Nach dem gleichen Schema läßt sich auch ein risikoloser digitaler Bargeldverkehr realisieren. Der Text des Dokumentes besteht dann aus dem Betrag und der Seriennummer des elektronischen Geldscheins, der Aktie oder Anleihe. Damit ist unmittelbar nachvollziehbar, woher das Dokument gekommen und wohin es gegangen ist.

Die VGI eignet sich auch sehr gut um Computerprogramme vor Computerviren zu schützen. Hierzu wird das Computerprogramm als VGI-Zahl dargestellt und auf einem nur einmal beschreibbaren Datenträger gespeichert. Vor jedem Programmstart wird überprüft, ob das Programm noch mit der gespeicherten Referenz übereinstimmt. Da jede Änderung des Programms zu einer anderen Zahl führt, wird dies sofort erkannt und das Programm kommt nicht zur Ausführung. Hierdurch wird sicher verhindert, daß ein verändertes Programm Schäden anrichten kann.

### Verfahren zur Erzeugung Geometrischer Zahlen (GZ)

Eine binäre GZ entsteht dadurch, daß die bisherige Zahl mit der Basis multipliziert wird und zu der so entstandenen Zahl der aktuelle Bitwert der Information addiert wird. Der Startwert ist Eins. Das Verfahren wird bei der Verschlüsselung solange fortgesetzt, bis alle darzustellenden Informationsbit nach diesem Schema in die Zahl integriert wurden. Die Entschlüsselung erfolgt sinngemäß in umgekehrter Weise, indem die Zahl solange Modulo Basis geteilt wird, bis der Startwert Eins erreicht ist. Die bei der Modulo Division anfallenden Reste ergeben wieder die einzelnen Bitwerte der Information.

### Verfahren zur Ver- und Entschlüsselung einer GZ siehe Schema 6

Bei der binären GZ steht eine Null für eine Verdopplung des bisherigen Wertes, ohne hinzufügen von Eins und eine Eins für eine Verdopplung, mit hinzufügen von Eins. Es ist zu beachten, daß die Stellen einer Zahl hier eine andere Bedeutung als beim Stellenwertsystem haben, auch wenn sich die Bitfolgen und die Rechenregeln nur marginal voneinander unterscheiden, d.h. die Multiplikation und die Division erfolgt, genau wie beim Stellenwertsystem, durch einfaches links- bzw. rechtsschieben der Register, womit die Ver- und Entschlüsselung auf diese Operation und das auslesen, des in der letzten Stelle des Registers stehenden Informationsbits, beschränkt ist. Eine GZ mit n Bit umfaßt den Wertebereich von **Basis**^{**n+1**} **- Basis** Zeichen, gegenüber **Basis**^{**n**} Zeichen beim herkömmlichen binären Stellenwertsystem. Der kleinste darstellbare Wert ist der Basiswert des Zahlensystems. Schema 6a zeigt die Verknüpfung der Bitfolge 1, 0, 1, 1, 1, 1 nach Schema 6.

### Erweiterung des Geometrischen Zahlensystems

Um die Geometrische Zahlendarstellung auch mit einer Basis größer Zwei verwenden zu können wird der Wertevorrat der Basis verdoppelt, um auftretende Reste darstellen zu können. Es wird ein zusätzlicher, mit Strich bezeichneter Wertevorrat eingeführt, der dazu dient anzuzeigen, daß die betreffende Stelle für einen Rest und nicht für eine Multiplikation mit der Basis steht. Der Strichwert unterdrückt die Multiplikation der betreffenden Stelle. Wenn ein Strichwert vorliegt führt dies, bei der Verschlüsselung entsprechend Schema 6 Zeile 3, dazu, daß der aktuelle Wert nur addiert wird. Durch die Einführung dieses, mit Strich bezeichneten, Wertevorrates können GZ mit jeder beliebigen Basis erzeugt werden und außerdem wird erreicht, daß der Wertebereich einer Bitfolge **Basis**^{**n+1**} doppelt so groß ist wie bei herkömmlichen Stellenwertsystemen. Schema 7 zeigt die Umrechnung von Dezimalzahlen, in GZ mit der Basis 4, den Werten 0, 1, 2, 3 und einem zusätzlichen Wertevorrat 0', 1', 2' und 3'. Die Strichwerte sorgen dafür, daß in Schema 6 Zeile 3 die Basis Null gesetzt wird.

### Aufbau intelligenter Objekte

Intelligente Objekte im Sinne der Erfindung zeichnen sich dadurch aus, daß sie ohne Implementierung eines Lösungsalgorithmus und ohne Eingabe einer Wissensbasis eigenständig lernen können und auf dieser Basis Entscheidungen treffen. Dies wird dadurch möglich, daß die Objekte so aufgebaut sind, daß alles hierzu notwendige Wissen bereits darin enthalten ist. Das zentrale Element zum Bau intelligenter Objekte liegt dabei in der Art der Datenspeicherung nach dem Verfahren der Geometrischen Informationsverknüpfung. Wie bereits gezeigt wurde kann ein Datenträger, der entsprechend VGI konzipiert wurde, den Inhalt jeder nur denkbaren DIN A-4 Seite speichern. Dies bedeutet umgekehrt, daß auf einem so gestalteten Datenträger bereits jede Information bereits vorhanden ist und nur noch aktiviert werden muß, indem die VGI-Zahl aktiviert wird, deren Entschlüsselung die betreffende Information erzeugt. Die Aktivierung der VGI-Zahl, mit der darin enthaltenen Idee, entspricht der Speicherung von Informationen, die bei herkömmlichen Datenbanken manuell eingegeben werden müssen. Da bei der VGI nur ein bereits vorhandenes Bit gesetzt werden muß, das die entsprechende Information enthält, kann die manuelle Eingabe von Informationen entfallen und es muß nur noch dafür gesorgt werden, daß das in der Anordnung enthaltene Wissen in sinnvoller Weise aktiviert wird.

Die bisher gezeigte Form der Datenspeicherung ist für den Bau intelligenter Maschinen allerdings ungeeignet. Sie ermöglicht es zwar alle notwendigen Informationen zu speichern, doch ist dabei kein blitzschneller Zugriff auf die gespeicherten Informationen möglich. Außerdem ist es bei dieser Form der Informationsspeicherung beispielsweise vollkommen unmöglich den Zusammenhang eines Textes mit einem Bild oder einem Geräusch zu erkennen. Hierzu müßten die einzelnen Informationen zunächst entschlüsselt werden, um sie dann durch einen Algorithmus einem Ereignis zuzuordnen. An der Implementierung eines derartigen Algorithmus ist die KI bisher stets gescheitert. Es wird deshalb ein anderer Weg beschritten und eine Maschine vorgestellt, welche die Plastizität des Gehirns nachbildet und auf dieser Basis einen Zugriff auf sämtliche gespeicherten Informationen in Echtzeit ermöglicht, ohne das hierbei ein Auswertungsalgorithmus nötig ist. Ziel ist es zu zeigen, daß Intelligenz kein ans Gehirn gebundenes Phänomen ist, welches nur in Verbindung mit der ganzen Hardware von Neuronen funktioniert. Die Phänomene des Bewußtseins und der Intelligenz können vielmehr durch jede erfindungsgemäß aufgebaute Maschine realisiert werden und das darin enthaltene Wissen kann jederzeit vom Menschen abgeschöpft werden.
Problemlösung: Bild 1 zeigt die schaltungstechnische Realisierung eines Pfades von Schema 6a mit einer Relaisschaltung. Sämtliche anderen Pfade werden analog aufgebaut. Wird der Schließer [S] eines Relais geschlossen, so erzeugt die Schaltungsanordnung das gleiche Bitmuster, das sich rechnerisch aus Schema 6 ergibt. Indem die komplette technische Realisierung von Schema 6a insgesamt 3200 mal parallelgeschaltet wird, kann sie 126³²⁰⁰ Bitmuster erzeugen. Hierzu schließt jeweils Relais 1 einer Stufe den Schließer der nächsten Stufe, der dort das gewünschte Bitmuster erzeugt.
Wird den Bitmustern ein Zeichensatz zugeordnet, so enthält die Schaltungsanordnung den Inhalt jeder DIN A-4 Seite in allen Sprachen dieser Welt. Denn es ist vollkommen gleichgültig, ob den Werten arabische, römische, kyrillische oder sonstige Schriftzeichen zugeordnet werden, immer ist in dieser Schaltungsanordnung alles Wissen um die mathematischen-, chemischen-, biologischen-und physikalischen Gesetze enthalten und natürlich auch diese Patentschrift. Kurz alles, was erst noch erforscht und bei der jetzigen KI in mühevoller Handarbeit in Datenbanken eingegeben werden muß, ist hier bereits vorhanden. Damit besteht jede erfinderische Leistung nur darin, zuerst die Verknüpfung gefunden zu haben, welche eine nützliche Idee enthält. Läßt sich die in einer Verknüpfung enthaltene Idee wirtschaftlich verwerten oder ist sie wissenschaftlich relevant, kann sofort ein Patent angemeldet oder ein akademischer Grad beantragt werden, obwohl die 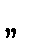 *neue Entdeckung"* schon uralt ist. Um das in der Schaltungsanordnung enthaltene Wissen abzuschöpfen, muß ein Schrittschaltwerk nur der Reihe nach alle in der Schaltungsanordnung enthaltenen Kombinationsmöglichkeiten aktivieren. Dies ermöglicht eine Forschungsarbeit, die der jetzigen *wissenschaftlichen* Forschung weit überlegen ist, denn alle Wissenschaftler zusammen können nichts finden, was nicht bereits da ist, aber sie sind unfähig so koordiniert vorzugehen wie eine erfindungsgemäß arbeitende Maschine, die systematisch, Schritt für Schritt und ohne Pause, sämtliche Ideen offenlegt und dabei jede Doppelarbeit vermeidet. Allerdings nützt es nichts, wenn am Ausgang der Maschine für den Bruchteil einer Sekunde eine nützliche Idee auftaucht und das Schrittschaltwerk sofort zur nächsten Kombination weiterschaltet. Die Maschine muß deshalb befähigt werden, die Bedeutung des in ihr enthaltenen Wissens selbständig zu erkennen.

Um lernen zu können wird die Schaltung nach Bild 1 mit Sensoren gekoppelt, welche die Wahrnehmungen der Umwelt in Bitmuster und die Bitmuster in VGI-Zahlen umwandeln, indem beispielsweise die einzelnen Bildpunkte eines CCD-Wandlers über eine Widerstandskaskade ausgewertet werden. Die Abstufung der Widerstände erfolgt so, daß sie die Potenzen abbilden. Die einzelnen Bildpunkte werden so angeordnet, daß sich im Sehzentrum die Punkte befinden, welche die größten Potenzwerte verkörpern und kreisförmig darum die immer kleineren Potenzwerte. Der im Sehzentrum befindliche Bildpunkt, mit dem größten Potenzwert, wird nun mit einer Blende (der Iris) gekoppelt und steuert diese so, daß sich hier z.B. immer der Wert 88 ergibt. Hierdurch ergibt sich eine feste Referenz, welche die übrigen wahrgenommenen Werte miteinander vergleichbar macht, weil unterschiedliche Helligkeitseinflüsse eleminiert werden. Außerdem wird auf diese Weise erreicht, daß die im Sehzentrum befindlichen Objekte stark gewichtet werden, während die weiter davon entfernt liegenden Wahrnehmungen weniger Einfluß haben. Der Sensor führt also eine Wichtung der wahrgenommenen Bitmuster durch. Die Wirkungsweise des Sensors hat damit einen ganz entscheidenden Einfluß auf die Bewußtseinsbildung, der durch die Fokussierung der Wahrnehmung auf die im Sehzentrum befindlichen hohen Potenzwerte ausgeübt wird und nicht durch ein algorithmisches Verfahren. Die in eine VGI-Zahl umgewandelte Abbildung der Umwelt wird nun in der Schaltungsanordnung gespeichert, indem die Steuerleitung (S) geschlossen wird, die das gewünschte Bitmuster aktiviert. Um das gesamte Bitmuster des Sensors zu speichern, wird jeweils Relais 1 mit dem Schließer (S) der nächsten parallelgeschalteten Stufe verbunden, der dort das benötigte Bitmuster aktiviert. Es entsteht damit ein Block, der die gleichen Bitmuster erzeugt wie der Sensor. Indem später einmal, über die Steuerleitung (S), ein Impuls ausgelöst wird, wird das gleiche Bitmuster durch die Schaltungsanordnung realisiert, das zuvor vom Sensor wahrgenommen wurde, d.h., Bewußtsein wird ausschließlich durch das Wahrnehmungsvermögen der Sensoren geprägt.

Die gespeicherte VGI-Zahl ist zunächst natürlich nichts weiter als ein beliebiges Bitmuster, dem zwar ein Text oder ein Bild zugeordnet werden kann, was aber niemals zu intelligentem Verhalten führt. Der alles entscheidende Schritt besteht darin, daß die Schaltungsanordnung, nach Schema 6a/6b, nicht zur eindimensionalen Darstellung von 126 Werten genutzt wird, sondern um 6 * 30 Werte darzustellen, gemäß Schema 6c/6d. Erst die mehrdimensionale Verknüpfung verschiedener Sinneseindrücke ermöglicht die Entstehung von Bewußtsein und Intelligenz.
Zur Identifizierung, der zu einem Sensor gehörenden Bitmuster, werden zwei Bit, entsprechend Schema 6c/6d, als Kennung genutzt. Die angeschlossenen Sensoren erhalten z.B. die Kennung Sehen [2], Riechen [3], Hören [4], Motorik [5], Tasten [6], Gleichgewicht [7]. Mit den restlichen 4 Bit werden 30 Zeichen dargestellt, was ausreicht um alles menschliche Wissen darzustellen, z.B. in Worten aus 26 Buchstaben oder 19 Konsonanten und 5 Vokalen oder in Bildern mit 30 Bit Farbtiefe. Durch die Kennung entsteht innerhalb der Schaltungsanordnung ein Sehzentrum, ein Hörzentrum, ein Geruchszentrum usw., genau wie beim Gehirn. Angenommen, die von einem Ereignis ausgehenden Signale ergeben bei allen 6 Sensoren den Wert 27, d.h. das Bitmuster 1, 0, 1, 1, so ergeben sich, wegen der Kennung der Sensoren, trotzdem sechs unterschiedliche VGI-Zahlen, womit selbst identische Bitmuster an unterschiedlicher Stelle in der Schaltungsanordnung gespeichert werden. Das Wesentliche ist nun, daß alle zu einem Ereignis gehörenden Bitmuster gleichzeitig verarbeitet und gespeichert werden, indem die sechs, zu einem Ereignis gehörenden VGI-Zahlen, über eine gemeinsame Steuerleitung miteinander verbunden werden. In diesem Beispiel werden also an sechs verschiedenen Stellen die Schalter S 27 geschlossen und über eine gemeinsame Leitung miteinander verbunden. Immer wenn später einmal die Steuerleitung aktiviert wird, werden gleichzeitig die sechs zusammengehörenden Bitmuster aktiviert. Nehmen wir einmal an, ein Bitmuster verkörpert den Klang eines Rennwagens, eins den Geruch von Rennbenzin, ein weiteres das Bild des schnell näher kommenden Rennwagens und ein anderes den verbalen Gedanken, *Rennwagen sind schnell*. Indem die vier Bitmuster an unterschiedlicher Stelle in der Schaltungsanordnung gespeichert und über eine gemeinsame Leitung miteinander verknüpft werden, erhält das Bitmuster des Textes, *Rennwagen sind schnell*, eine völlig neue Qualität. Es handelt sich nicht mehr um ein beliebiges Bitmuster, das, durch die willkürliche Zuordnung eines Alphabets, einen Text ergibt, sondern um das Bitmuster eines Textes, der in Verbindung mit realen physikalischen Wahrnehmungen zu einem Erkenntnisprozess führt. Da die zu einem Ereignis gehörenden VGI-Zahlen über eine gemeinsame Steuerleitung miteinander verbunden sind, bewirkt die spätere Aktivierung einer VGI-Zahl, durch einen Sensor, über die gemeinsame Steuerleitung, die **gleichzeitige** Aktivierung der übrigen VGI-Zahlen, d.h. das Motorgeräusch eines Rennwagens aktiviert alle zugehörigen VGI-Zahlen. Indem die restlichen Bitmuster durch die in der Maschine gespeicherten VGI-Zahlen erzeugt werden, aktiviert das vom Sensor wahrgenomme Bitmuster die übrigen damit verbundenen Sinneseindrücke bzw. Bitmuster. So wird das Geräusch eines Rennwagens das betreffende Objekt z.B. veranlassen die Straße nicht zu überqueren, weil damit die Vorstellung eines mit hoher Geschwindigkeit näher kommenden Autos verbunden ist. Die Maschine kann anhand des Klangs auch erkennen, ob sich das Auto entfernt, weil sich das Frequenzmuster eines näher kommenden Autos von dem eines sich entfernenden Autos unterscheidet und damit eine andere VGI-Zahl ergibt. Da jede frequenzabhängige VGI-Zahl mit der zugehörigen visuellen VGI-Zahl verbunden ist, erkennt die Maschine durch den Klang, ob sich das Auto nähert oder entfernt. Es sind ja jeweils nur die zu einem Ereignis gehörenden VGI-Zahlen miteinander gekoppelt. Je mehr solche Verknüpfungen in der Maschine gespeichert sind, um so mehr hat sie gelernt und um so schneller wird sie ein bekanntes Bitmuster erkennen. Es ist hier genau umgekehrt wie bei herkömmlichen Expertensystemen, die bei zunehmender Datenflut immer langsamer werden. Die Schaltungsanordnung dient dementsprechend als Speichermedium für die von den verschiedenen Sensoren wahrgenommenen Bitmuster.

Anwendungsbeispiel: In einem Erkennungssystem werden einige Millionen Bilder von einer Person aus den unterschiedlichsten Perspektiven gespeichert. Da diese Bilder zu einer Person gehören, sind sie alle über die Steuerleitung mit dem gleichen Namen verbunden. Das Steuerzentrum legt nun sämtliche Steuerleitungen 16 mal pro Sekunde an die Spannungsquelle an. Die AND-Verknüpfung sorgt dafür, daß der FI-Schalter nur dann aktiviert wird, wenn ein übereinstimmendes Bitmuster erkannt wird. Ist dies der Fall, so wird die Steuerleitung an die Spannungsquelle geschaltet, die das Bitmuster in der Schaltungsanordnung erzeugt. Dieses Bitmuster bleibt damit auch dann aktiv, wenn der Steuerimpuls abgeklungen ist. Da die Steuerleitung des Bitmusters gleichzeitig mit dem Namen der betreffenden Person verbunden ist, erfolgt die Zuordnung des Bildes zu einer bestimmten Person, ohne daß hierzu ein Algorithmus nötig ist. Der wesentliche Vorteil dieser Methode besteht darin, daß alle gespeicherten Informationen gleichzeitig abgerufen werden können und von einer Person Millionen Bilder gespeichert werden können. Es kommt hierbei nicht darauf an, daß besonders viele Bildpunkte gespeichert werden, sondern daß möglichst viele Perspektiven vorhanden sind. Bei einer Raketensteuerung würde das visuelle Bild z.B. noch mit den Koordinaten eines Satelittennavigationssystems, einer Karte des Erdmagnetfeldes und einem künstlichen Horizont verbunden. Je größer die Anzahl gespeicherten Perspektiven ist, umso leichter gelingt es dem System, die augenblickliche Position exakt zu bewerten. Hierbei kommt der Wirkungsweise der Sensoren eine zentrale Bedeutung zu. So wird es nie gelingen, eine völlige Übereinstimmung der aufgezeichneten Bitmuster zu erreichen. Der Sensor hat hier die Aufgabe eine Selektion vorzunehmen, indem er beispielsweise die Brennweite des CCD-Wandlers so verändert, daß sich eine Übereinstimmung mit einem Ausschnitt des gespeicherten Bitmusters ergibt. Dies ist möglich, da gleiche VGI-Zahlen ja gleiche Bitmuster ergeben. Es reicht deshalb ein hinreichend großer Bildausschnitt, um ein Objekt mit Sicherheit identifizieren zu können. Der grundlegende Unterschied zu neuronalen Netzen, Fuzzi-Logik oder Expertensystemen besteht darin, daß rein mechanisch ein Vergleich von Bitmustern vorgenommen wird und keine mathematische oder algorithmische Bewertung nötig ist.

Die zum Verständnis des Funktionsprinzips venstendete Relaisschaltung, gemäß Bild 1, wird nun durch eine funktionell gleichwertige Materieanordnung ersetzt, d.h., die einzelnen Zellen von Schema 6a werden nicht mehr durch Relais oder Transistoren dargestellt, sondern durch elektrisch leitende Kugeln, die von einer Isolationsschicht umgeben sind. Die Kugeln werden so angeordnet, daß jede Kugel jeweils zu den zwei Kugeln der nächsten Stufe eine leitende Verbindung besitzt, die sich logisch aus Schema 6a ergibt. Dementsprechend besitzt Kugel 1 einen elektrisch leitenden Übergang zu Kugel 2 und 3, Kugel 3 zu Kugel 6 und 7, Kugel 6 zu Kugel 12 und 13, Kugel 13 zu Kugel 26 und 27, Kugel 27 zu Kugel 54 und 55, Kugel 55 zu Kugel 110 und 111. Hierbei ist noch sicher zu stellen, z.B. durch einen pn Übergang oder np Übergang, daß der Strom immer nur von der höheren zur niedrigeren Kugel fließen kann. Die Notwendigkeit, zur einseitigen Sperrung des Stromflusses, ergibt sich aus der Tatsache, daß das GZ, in der Wirkung, weitgehend einem ternären Stellenwertsystem entspricht. Bei der technischen Realisierung ist dies zu beachten! Die geradzahligen Kugeln einer Spalte werden nun noch über einen gemeinsamen Widerstandsdraht mit X-Ohm mit dem Operationsverstärker der jeweiligen Stufe verbunden und die ungeradzahligen Kugeln über einen Widerstandsdraht mit Y-Ohm. Der Widerstandsdraht hat gleichzeitig die Aufgabe dafür zu sorgen, daß die Kugeln einer Spalte entkoppelt werden, so daß keine Spannung in andere Kugeln indiziert wird, die zu einem Fehlsignal führt. Wird dem Widerstandswert X der Wert 0 zugeordnet und dem Widerstandswert Y der Wert 1, so nimmt der Operationsverstärker den Wert 0 oder 1 an, je nachdem, ob eine Kugel in der Spalte mit den geraden Zahlen oder ungeraden Zahlen unter Spannung steht. Welche Kugeln unter Spannung stehen hängt wiederum davon ab, welche Kugel über die Steuerleitung mit dem Steuerzentrum verbunden wird. Wird z.B. eine Spannung an Kugel 111 angelegt, so stehen gleichzeitig die Kugeln 55, 27, 13, 6, 3 und 1 mit unter Spannung, da sie leitfähig miteinander verbunden sind. Die Operationsverstärker (OV) 1 - 6 nehmen damit folgende Werte an: OV1 = 1, OV2 = 0, OV3 = 1, OV4 = 1, OV5 = 1, OV6 = 1, da sie über den Widerstandsdraht mit den unter Spannung stehenden Kugeln verbunden sind. Kugel 1 wird jeweils mit der Kugel der nächsten Stufe verbunden, die in dieser Stufe das benötigte Bitmuster erzeugt. Auf diese Weise wird in der Schaltungsanordnung das vollständige Bitmuster des Sensors oder einer DIN A-4 Seite gespeichert. Um das gesamte Bitmuster zu aktivieren reicht es, an die Steuerleitung 111 eine Spannung anzulegen, da jeweils über Kugel Null die nächste Stufe der Schaltungsanordnung angesteuert wird. Die technische Realisierung von Schema 6c erfolgt sinngemäß.

Da jedes Bitmuster nur einmal in der Schaltungsanordnung vorkommt, kann das Steuerzentrum an sämtliche Steuerleitungen gleichzeitig einen Spannungsimpuls anlegen und damit alle in der Anordnung gespeicherten Bitmuster gleichzeitig aktivieren. Die AND-Verknüpfung sorgt schließlich dafür, daß es nur in der Steuerleitung zu einem Stromfluß Kommt, die mit einem Bitmuster des Sensors übereinstimmt. In dieser Steuerleitung bewirkt der FI-Schutzschalter daraufhin, daß diese direkt an die Spannungsquelle geschaltet wird und damit auch noch nach abklingen des Steuerimpulses aktiv bleibt.

Die zum besseren Verständnis der Funktionsweise der Schaltungsanordnung verwendeten Operationsverstärker können entfallen wenn Sensoren verwendet werden, die ihre Signale entsprechend Schema 6a/6c erzeugen, d.h. alle geraden Zahlen befinden sich in einer Spalte und alle ungeraden Zahlen in der anderen Spalte. Hierdurch kann die AND-Verknüpfung die Spalten direkt vergleichen. Die Information ergibt sich dann nicht aus einem unterschiedlichen Widerstandswert je Stufe, sondern aus dem direkten AND-Vergleich der rechten und der linken Spalte der jeweiligen Stufe. Da sich die Information einzig aus dem Weg des Elektrons ergibt, entfallen alle überflüssigen Schaltvorgänge. Gleichzeitig wird erreicht, daß es nur dann zu einem Stromfluß kommt, wenn eine gespeicherte Information erkannt wird. Zur mathematischen Beschreibung der Funktionsweise der Schaltungsanordnung ist die Verwendung des Geometrischen Zahlensystems sinnvoll, da das Stellenwertsystem hier systembedingt versagt.

Der alles entscheidende Schritt, zur Nutzung der Schaltungsanordnung als Speicher, besteht darin, daß sie als Zählsystem und nicht als Stellenwertsystem aufgebaut ist. Um eine DIN A4-Seite nach dem GZ darzustellen würde es beispielsweise ausreichen 3.200 sechs Bit breite Register parallelzuschalten und es wäre überflüssig die 126 Werte von Schema 6b technisch zu realisieren. Doch erst durch die körperliche Darstellung aller möglichen 126 Werte läßt sich jede DIN A-4-Seite in der Anordnung speichern. Hierzu werden zwischen Kugel 1 einer Stufe und sämtlichen Kugeln der nächsten Stufe Verbindungsleitungen gelegt, die jedoch zunächst durch eine Isolierschicht von der Kugel getrennt sind. Ein Bitmuster wird dadurch in der Schaltungsanordnung gespeichert, daß ein Spannungsimpuls erzeugt wird, der die Isolierschicht durchbrennt. Wird die Isolierschicht durchgebrannt, so ist die Information fest in der Anordnung gespeichert. Die AND-Verknüpfung sorgt dabei dafür, daß der Spannungsimpuls nur an die Kugeln gelangt, deren Isolation durchgebrannt werden soll. Außer zum Bau intelligenter Maschinen kann die Schaltungsanordnung auch dazu benutzt werden, um Texte, Bilder, Töne usw. zu speichern. Ein Text wird in diesem Falle mit einem Stichwort verbunden und durch dessen Aufruf aktiviert.

Zur technischen Umsetzung des vorgestellten Speicherprinzips lassen sich vielfältige äquivalente Lösungen einsetzen. So können die Kugeln durch eine Transistorschaltung ersetzt werden oder es werden mit Wasser oder einer Salzlösung gefüllte Hohlkugeln in der beschriebenen Form miteinander verbunden. Statt einer Spannung wird nun ein Druck angelegt oder eine chemische Reaktion eingeleitet, die sich auf einem ganz bestimmten Weg fortpflanzt. Werden die Kugeln in jeder Ebene um 90° gedreht, so ergibt sich die typische Struktur der Gehirnwindungen. Dies ist deshalb sehr nützlich, weil hierdurch der kleinstmögliche Platzbedarf erreicht wird und lange Verbindungsleitungen entfallen.

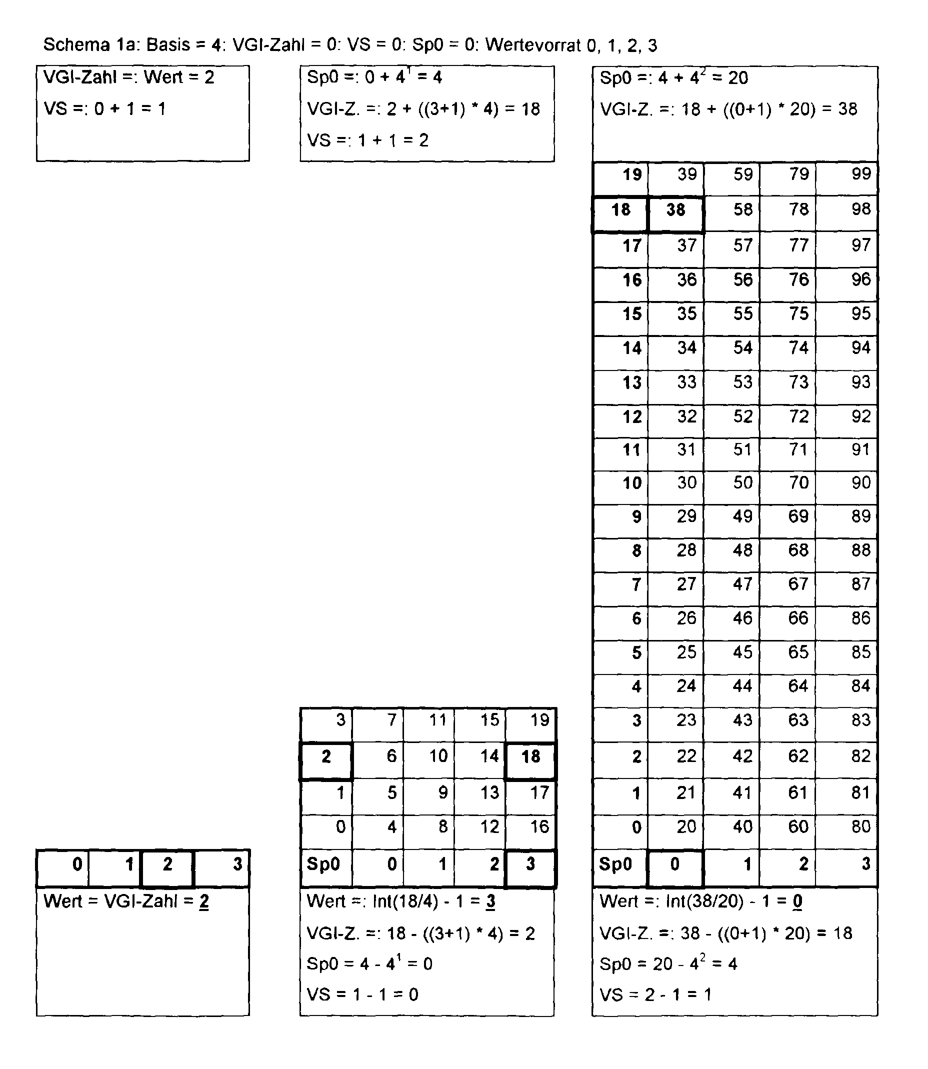

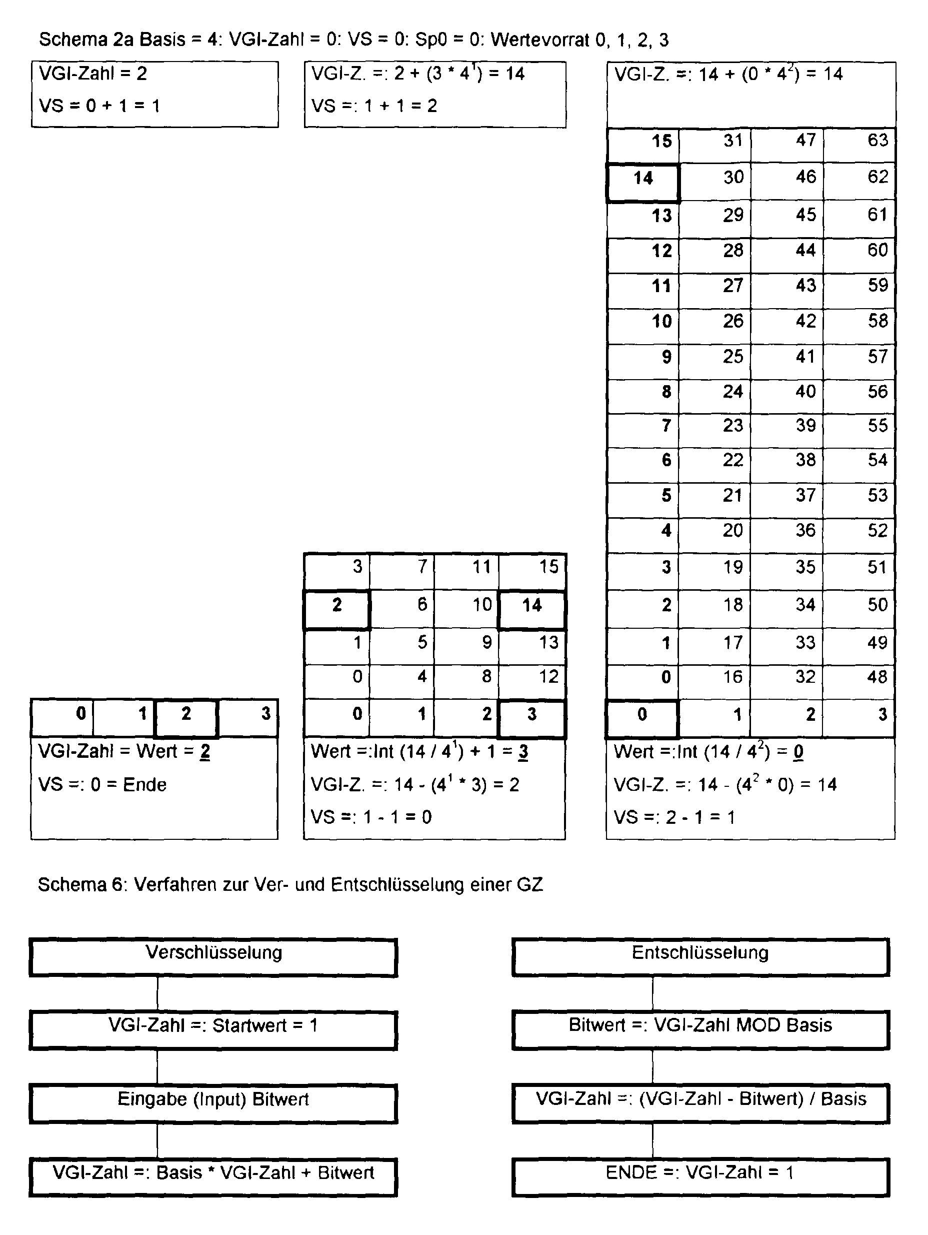

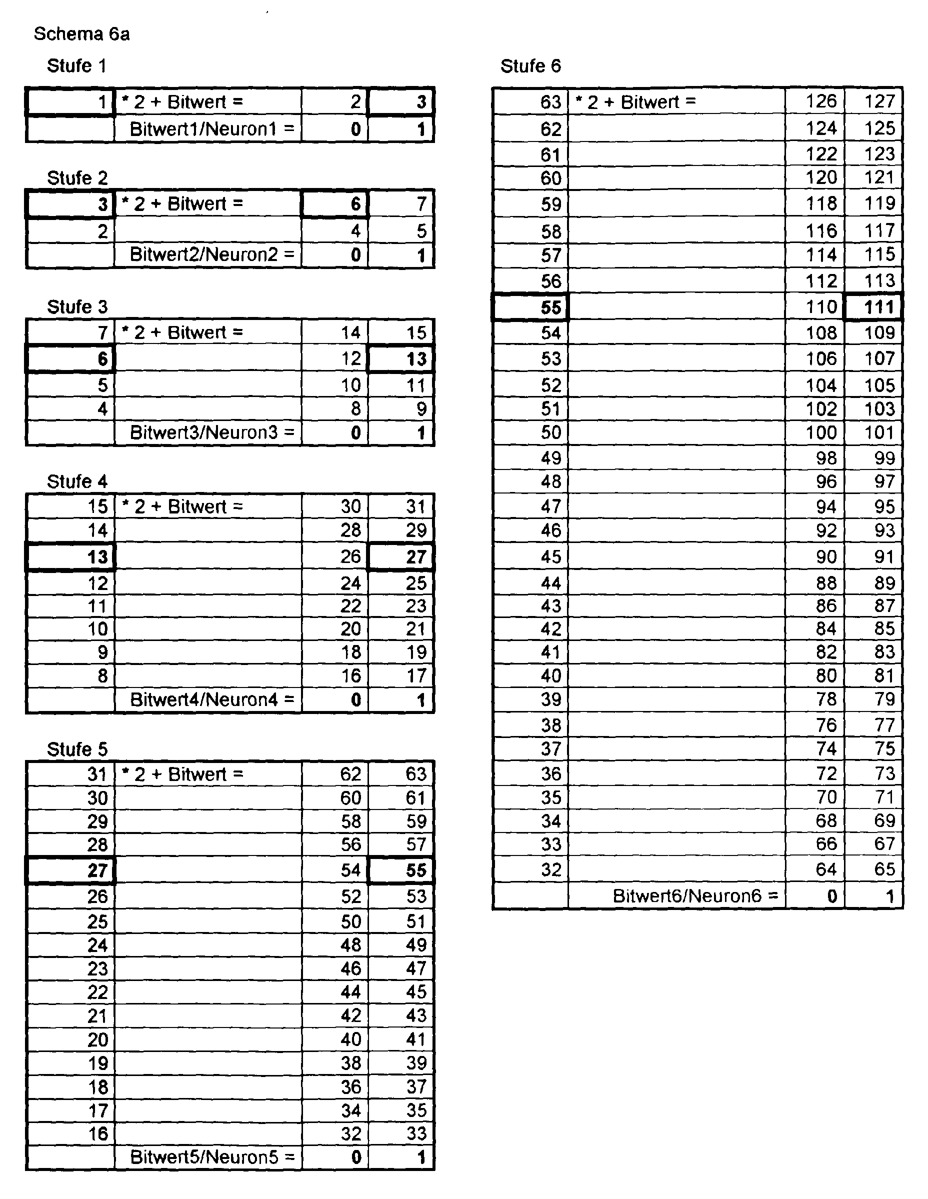

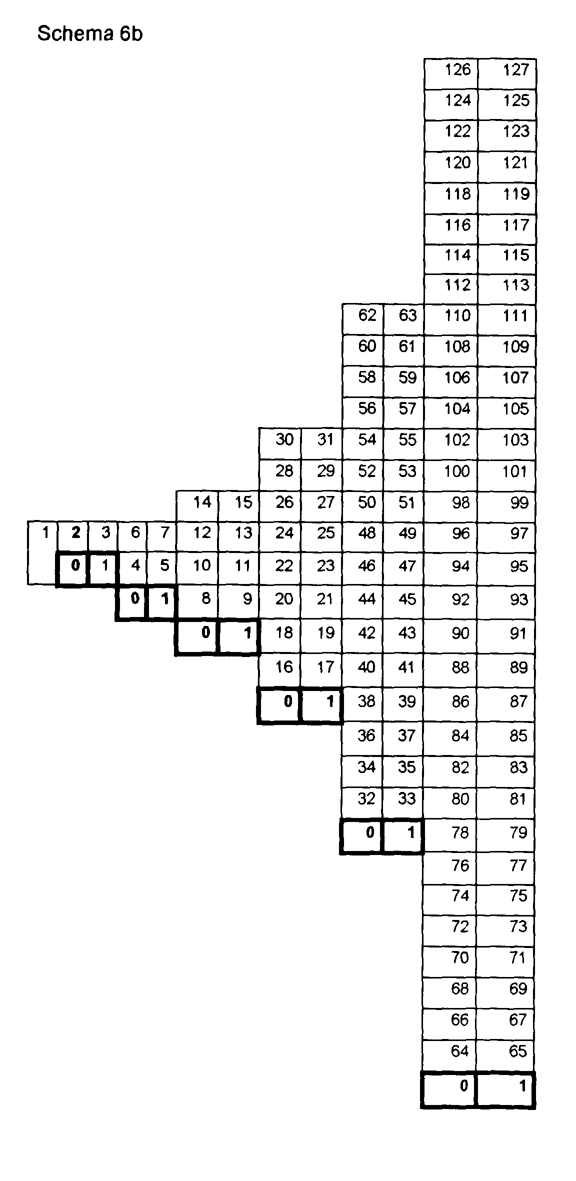

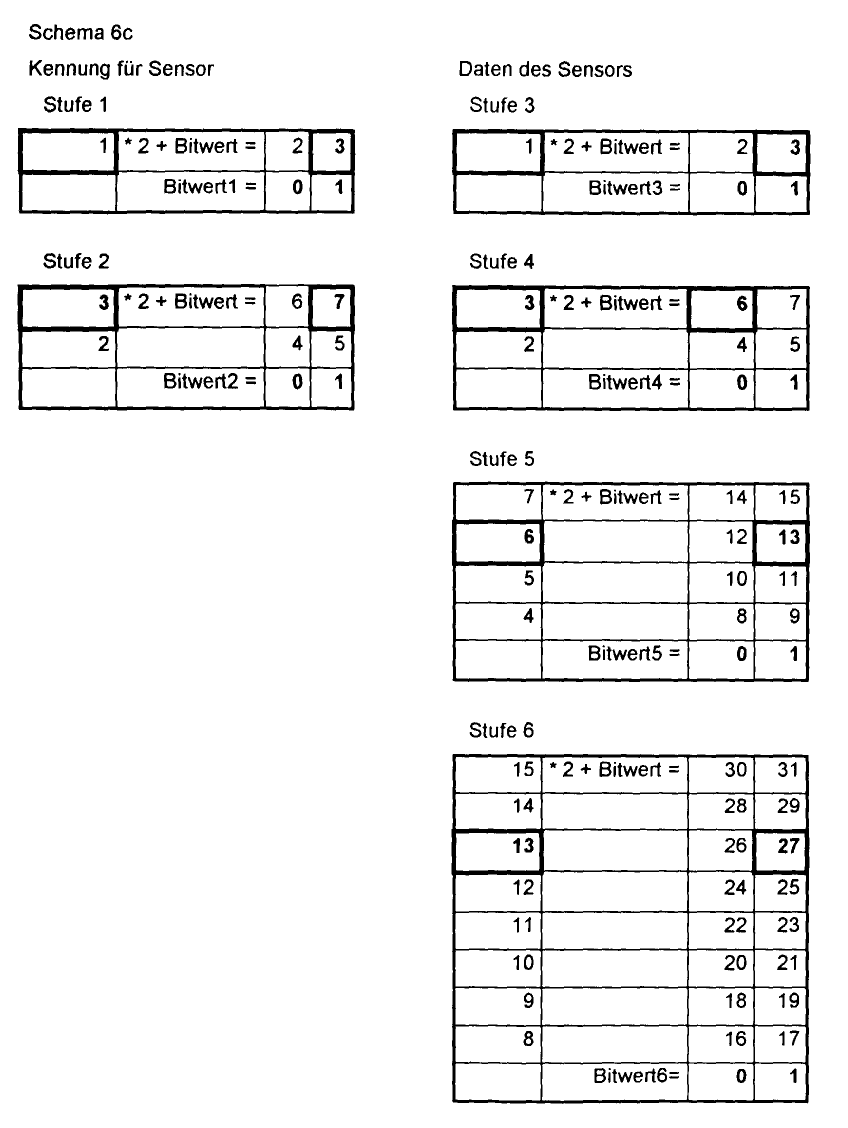

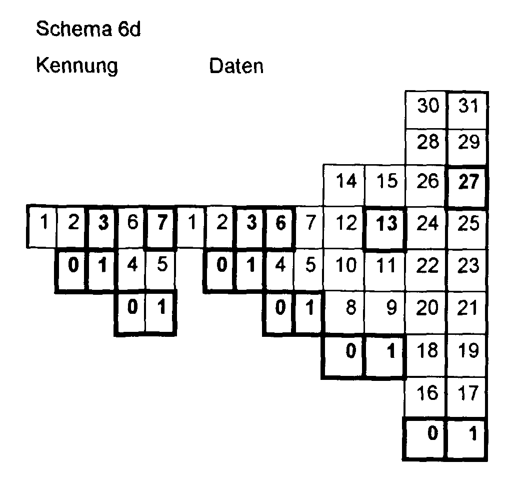

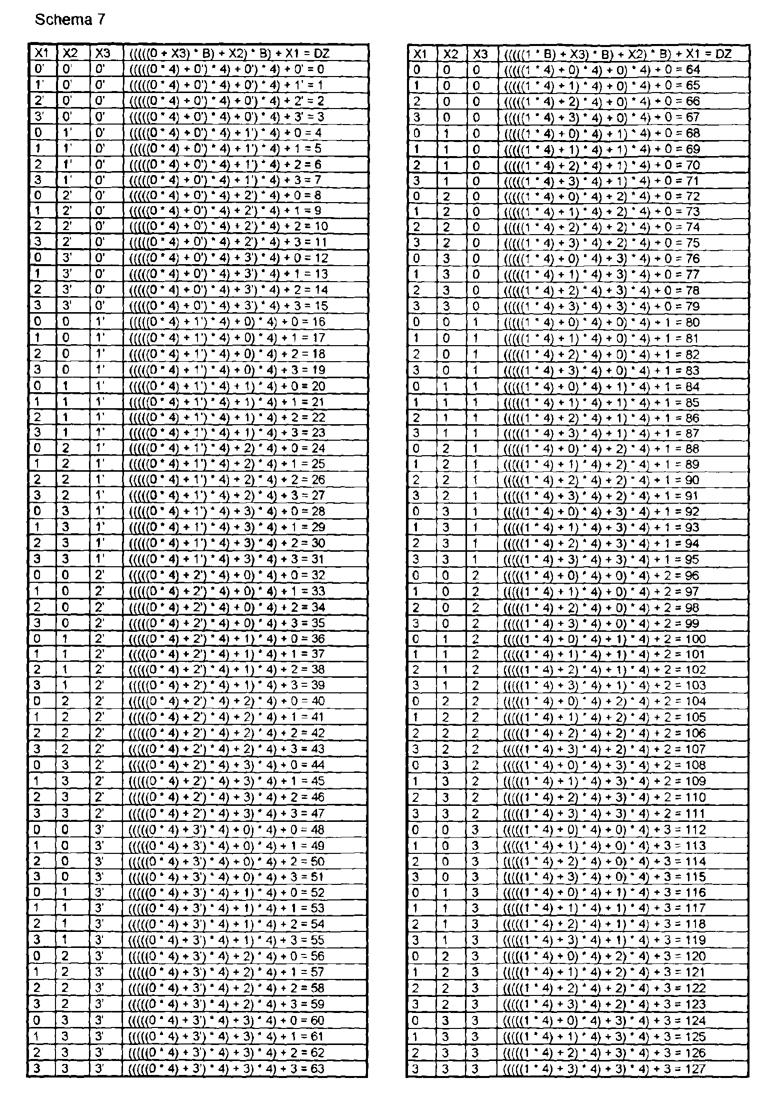

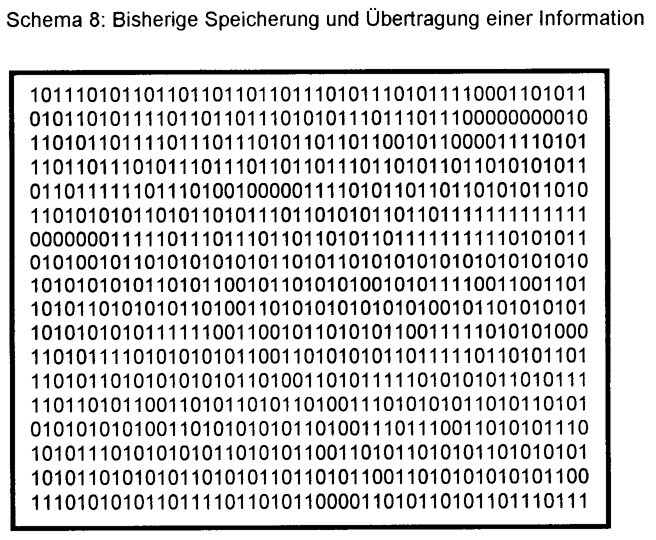

Die Informationsgehalt des Codes nach Schema 8 mit z = 2 Symbolen beträgt: n = 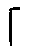 log₂ z 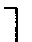 und allgemein bei a-wertigen Zahlensystemen: z = aⁿ mit n = 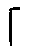 logₐ z 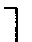 .

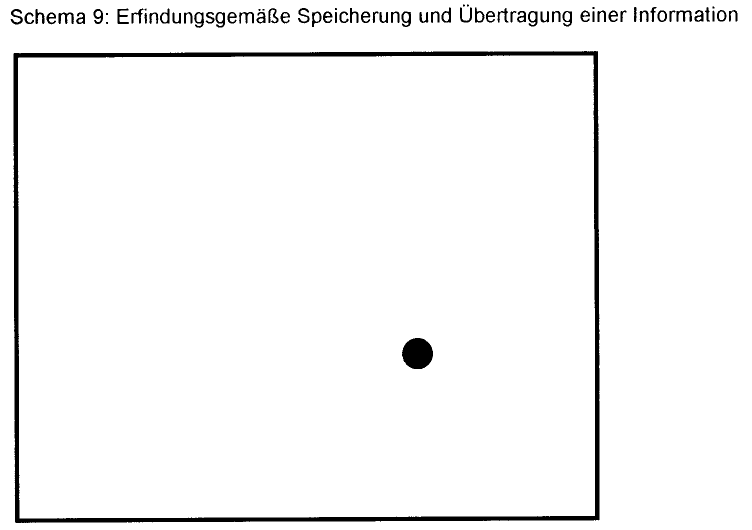

Statt die Information dadurch darzustellen, dass an den Koordinaten der VGI-Zahl ein Punkt gemacht wird der anzeigt, dass hier eine Information abgelegt ist, kann die Information z.B. auch in der Form
**VGI-Zahl = a * x**^{**m/n**} **+ Rest** z.B (x₁² + x₂² + x₃² + x₄²)
dargestellt und übermittelt werden. Die Information kann nun mit Hilfe von Schema 3 wieder binär dargestellt und gemäß Schema 8 oder Schema 9 gespeichert und übertragen werden. Die binäre Information hat nun selbstverständlich nicht mehr der Informationsgehalt n = 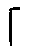 log₂ z 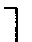 . Der Informationsgehalt hängt vielmehr davon ab, wie groß der durch die VGI-Zahl **a * x**^{**m/n**} **+ Rest** dargestellte Zahlenwert ist.

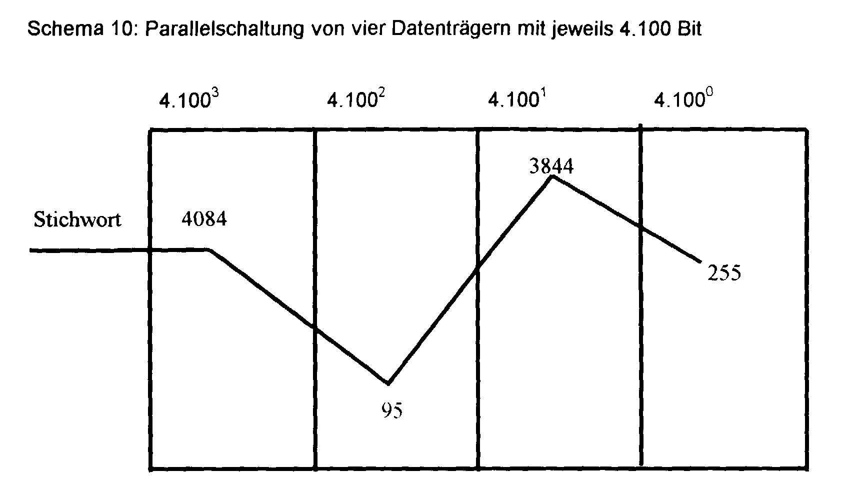

## Patentansprüche

1. Verfahren zur Verknüpfung von als Bit-Folgen eingegebenen Informationen zu einer Gesamtheit, **dadurch gekennzeichnet,**
• dass die am Eingang einer technischen Einrichtung als Bit-Folge eingegebene Information zu einer solchen Gesamtheit verknüpft wird, dass sie nur dieser einen Bit-Folge zuzuordnen ist,
• dass die am Eingang einer technischen Einrichtung eingegebene Gesamtheit wieder in die ursprüngliche Bit-Folge zurückverwandelt wird, indem das bei der Verknüpfung verwendete Verfahren in inverser Weise auf die Gesamtheit angewendet wird,
• dass die bei der Verknüpfung entstandene Gesamtheit in bedarfsgerechte Teilgrößen zerlegt werden kann, die dann von technischen Einrichtungen rationeller verarbeitet werden können als die ursprüngliche Bit-Folge, ohne dass sich dabei etwas am Informationsgehalt der Gesamtheit ändert,
• dass die Gesamtheit bei der Verknüpfung untrennbar mit einer frei wählbaren Kennung oder einem Schlüssel verknüpft werden kann, so dass sofort erkennbar ist, wenn die in der Gesamtheit enthaltene Information nachträglich verändert wurde oder es bei der Informationsübertragung zu einem Informationsverlust gekommen ist,
• dass sich der Informationsgehalt der Bit-Folge einer technischen Einrichtung, gegenüber einer im Stellenwertsystem dargestellten Bit-Folge, verdoppelt, indem jedes Bit für eine Multiplikation der bisherigen Zahl mit der Basis und die Addition des aktuellen Bitwertes steht.

2. Verfahren zur Speicherung von Bit-Folgen die nach Anspruch 1 zu einer Gesamtheit zusammengefaßt wurden, **dadurch gekennzeichnet**, dass an den Koordinaten des Speicherortes des Datenträgers, deren Größe der aus der Verknüpfung entstandenen Gesamtheit äquivalent ist, ein Kennungsbit gesetzt wird, das anzeigt, dass an dieser Stelle ein Informationsinhalt abgelegt wurde. Sofern sich eine Gesamtheit nicht durch setzen eines einzigen Bits auf dem Datenträger speichern läßt, wird sie in Teilgrößen zerlegt, die auf mehreren parallelgeschalteten Datenträgern durch setzen jeweils eines Bits gespeichert werden. Die Gesamtheit ergibt sich hierbei aus der Summe der zusammengehörenden Einzel-Koordinaten der zu einem Stellenwertsystem zusammengeschalteten Datenträger.

3. Verfahren nach Anspruch 2, **dadurch gekennzeichnet**, dass die Koordinaten eines durch ein Kennungs-Bit als belegt angezeigten Speicherortes als die die Information enthaltende Gesamtheit mit inversen Verknüpfungen gemäß Anspruch 1 in die ursprüngliche Bit-Folge zurückverwandelt wird.

4. Verfahren zur Übertragung von Informationen, **dadurch gekennzeichnet**, dass es eine Einrichtung aufweist, welche die nach Anspruch 1 zu einer Gesamtheit zusammengefaßten Informationen als Zahl behandelt und dadurch an den Empfänger übermittelt, dass ein beim Empfänger befindlicher Zeitmesser durch ein Startsignal, zwecks Sychronisation, auf null gesetzt bzw. gestartet und nach Ablauf des Zeitintervalls, der der zu übermittelnden Zahl entspricht, durch ein weiteres Signal gestoppt wird, das signalisiert, dass eine dieser Information entsprechende Zahl übermittelt wurde.

5. Verfahren zur Übertragung von Informationen, **dadurch gekennzeichnet**, dass es eine Einrichtung aufweist welche die gemäß Anspruch 4 übermittelten Zahlen, wieder in die ursprüngliche Bit-Folge oder eine Amplitude, eine Frequenz oder eine Phasenverschiebung, gemäß Anspruch 1, umwandelt.

6. Verfahren zur Übertragung von Informationen, **dadurch gekennzeichnet**, dass die nach Anspruch 1 zu einer Gesamtheit zusammengefaßte Information in Teilgrößen zerlegt und dann mit einem größeren als dem ursprünglichen Wertebereich übertragen wird, wodurch sich die Übertragungsdauer verkürzt.

7. Verfahren nach Anspruch 6, **dadurch gekennzeichnet**, dass die empfangenen Teilgrößen wieder zu einer Gesamtheit zusammengefaßt werden und die die Information enthaltende Gesamtheit mit inversen Verknüpfungen, gemäß Anspruch 1, in die ursprüngliche Bit-Folge zurückverwandelt wird.

8. Verfahren zur Kontrolle einer entropiefreien Datenverarbeitung und zur Sicherung gegen unbefugten Zugriff auf Informationen, **dadurch gekennzeichnet,** dass eine nach Anspruch 1 zu einer Gesamtheit zusammengefaßte Bit-Folge untrennbar mit einer Kennung oder einem Schlüssel versehen wird, so dass, durch Prüfung auf das Vorhandensein der vereinbarten Kennung, feststellbar ist, ob die vollständige Information nachträglich verändert wurde oder ob es bei der Informationübertragung zu einem Informationsverlust gekommen ist und dass die Information nur dann entschlüsselt werden kann, wenn der zur Verschlüsselung verwendete Schlüssel bekannt ist.

9. Vorrichtung, **dadurch gekennzeichnet**, dass sie die nach Anspruch 1 entstehende Gesamtheit, d.h. alle Zahlen bzw. die den Zahlen äquivalenten Bitmuster, die bei der Verknüpfung zur Gesamtheit entstehen können, darstellen kann, indem Materie in Form eines Zählsystems so angeordnet wird, dass bei anlegen eines Signals das Bitmuster erzeugt wird, das die Gesamtheit gemäß Anspruch 1 repräsentiert.

10. Vorrichtung nach Anspruch 9, **dadurch gekennzeichnet**, dass ein Bitmuster dadurch erzeugt wird, dass das als Informationsträger verwendete Signal, z.B. ein Elektron, ein Photon, ein Druck, eine chemische Reaktion, einen ganz bestimmten Weg zurücklegt und sich die Information aus dem zurückgelegten Weg des Signals ergibt und nicht durch Schaltvorgänge, wie bei herkömmlichen Computern.

11. Vorrichtung nach Anspruch 9, **dadurch gekennzeichnet**, dass sämtliche darin gespeicherten Informationen gleichzeitig abgerufen werden können und nur dann mehr Energie verbraucht wird, als zur Erzeugung des Prüfsignals notwendig ist, wenn die gesuchte Information gefunden wurde.

12. Vorrichtung nach Anspruch 9, **dadurch gekennzeichnet**, dass sie so aufgebaut ist, daß sämtliches Wissen bereits darin enthalten ist und nur aktiviert werden braucht und nicht wie bei herkömmlichen fall-und wissensbasierten Expertensystemen erst vom Menschen eingegeben werden muß.

13. Vorrichtung nach Anspruch 9, **dadurch gekennzeichnet**, dass sie in Verbindung mit Sensoren selbständig lernen kann, indem die Sensoren die Umwelt als Bitmuster abbilden, die dann als Gesamtheit, gemäß Anspruch 1, in der Vorrichtung gespeichert werden, so dass diese Bitmuster nun jederzeit von der Vorrichtung erzeugt werden können, auch wenn die Sensoren das zu einem Ereignis gehörende Bitmuster im Augenblick nicht wahrnehmen.

14. Vorrichtung nach Anspruch 9, **dadurch gekennzeichnet**, dass die beim Lernprozess erworbenen Erfahrungen als Bitmuster in der Vorrichtung gespeichert werden und diese Bitmuster, die Informationen gemäß Anspruch 1 darstellen, als künftige Entscheidungsgrundlage verwendet werden.

15. Vorrichtung nach Anspruch 9, **dadurch gekennzeichnet**, dass die zu einem Ereignis gehörenden Bitmuster verschiedener Sensoren fest miteinander verknüpft werden, so dass in der Vorrichtung ein mehrdimensionales Informationsfeld entsteht, welches einem Ereignis zuzuordnen ist.

16. Vorrichtung nach Anspruch 9, **dadurch gekennzeichnet**, dass alle, gemäß Anspruch 15, miteinander verknüpften Bitmuster aktiviert werden, wenn ein Sensor ein in der Vorrichtung gespeichertes Bitmuster erzeugt, wodurch erlernte Zusammenhänge ohne Bewertungsalgorithmus erkannt werden.
